# EUROPEAN PATENT APPLICATION

(11) **EP 2 666 660 A1**
(43) Date of publication of application: **27.11.2013**
(21) Application number: 13168479.7
(22) Date of filing: 21.05.2013
(51) Int. Cl.: B60K 37/06, G06F 3/0481

(54) **Vehicle information display**

(30) Priority: 23.05.2012 US 201213478398
(71) Applicant: Continental Automotive Systems US, Inc., Auburn Hills, MI 48326 (US)
(72) Inventor: Montero-Montesdeoca, Salvador, Zapopan (Jalisco) (MX); Pineda-Deom, David, 45645 Tlajomulco de Zuniga (MX)
(74) Representative: Isarpatent

(57) **Abstract**

An automotive instrument cluster human machine interface (HMI) has a display screen and an input. The display screen displays a polyhedral with each face of the polyhedron having unique information. The input is operable to rotate the polyhedron such that a new face is displayed on the display screen.

## Description

### TECHNICAL FIELD

The present disclosure is related generally to automotive instrument clusters, and more specifically to human machine interfacing (HMI) for automotive instrument clusters.

### BACKGROUND OF THE INVENTION

Drivers of automobiles utilize certain essential information, such as rate of speed and engine revs, during operation of the vehicle. Other information, such as a trip odometer, engine efficiency, fuel efficiency, current radio station, etc., is not essential for vehicle operation and therefore does not need to be constantly displayed. Displaying all of the optional information simultaneously consumes real estate on the instrument cluster and increases the required size of the instrument cluster. Existing systems for displaying the non-essential information are non-intuitive and are not aesthetically pleasing.

### SUMMARY OF THE INVENTION

Disclosed is an automotive instrument cluster human machine interface (HMI) having a display screen operable to display a three dimensional polyhedron, wherein each face of the polyhedron includes indicia indicating unique vehicle information, and an input, wherein the input is operable to rotate the polyhedron such that a new face of the polyhedron is displayed on the display screen.

Also disclosed is a method for operating an automotive instrument panel human machine interface (HMI) having the steps of: displaying a polyhedron, wherein each side of the polyhedron includes at least one unique indicia indicative of vehicle information and accepting an input and rotating the polyhedron to an adjacent face in response to the input.

These and other features of the present invention can be best understood from the following specification and drawings, the following of which is a brief description.

### BRIEF DESCRIPTION OF THE DRAWINGS

Figure 1 illustrates an example instrument cluster having a Human Machine Interface (HMI) element.

Figure 2 illustrates an alternate example HMI element that can be used in the example of Figure 1 in greater detail.

Figure 3 illustrates an alternate example HMI element that can be used in the example of Figure 1 in greater detail.

Figure 4 illustrates another example HMI element.

Figure 5 illustrates a cube rotating from a first displayed face to a second displayed face.

### DETAILED DESCRIPTION

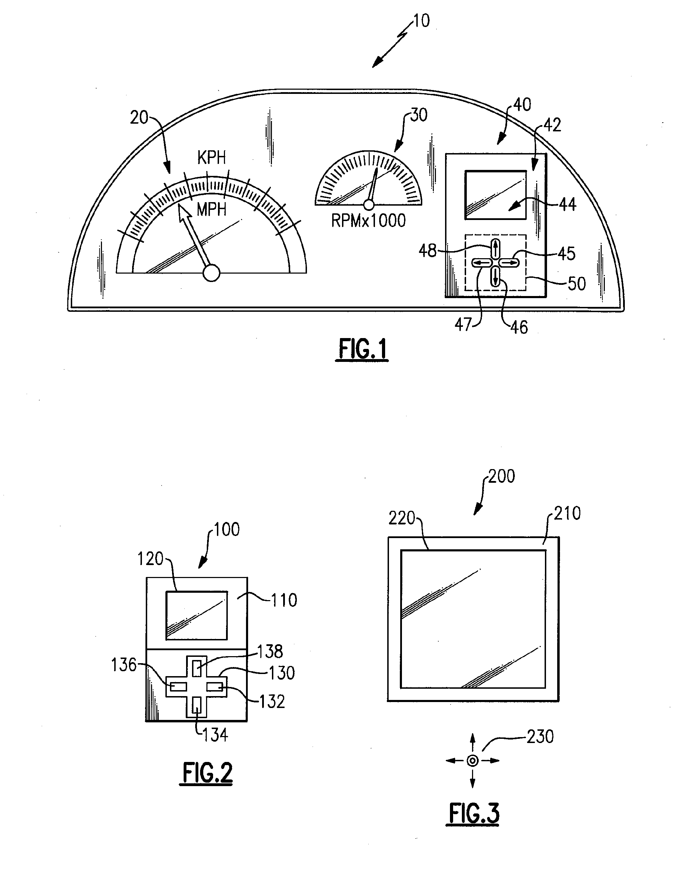

Figure 1 illustrates an example instrument cluster 10 for an automobile such as a car or a sport utility vehicle (SUV). The instrument cluster 10 includes a speedometer 20, a tachometer 30, and a human machine interface (HMI) element 40. Although not illustrated in the example instrument cluster 10, the instrument cluster 10 can include several indicia indicating oil level, tire pressure, engine temperature or other features that may be necessary for a driver to see during vehicle operation dependent on the design of the vehicle.

In the illustrated example of HMI element 40, non-essential vehicle information, such as a first and second trip odometer, fuel efficiency, current radio station, incoming cell phone call, etc., are displayed on a display screen 42 of the HMI element 40. In the illustrated example HMI element 40, the display screen 42 is a touch screen and displays one face of a cube 44, as well as four directional arrows 45, 46, 47, 48, that combine to form a directional pad 50. The display screen 42 is configured such that a user swiping their finger across the directional pad 50 in the direction of one of the arrows 45, 46, 47, 48, 49 causes the cube 44 to rotate the direction of the user's finger swipe. Each face of the cube 44 contains different, non-essential, information. Alternately, other forms of touch screen input, such as a stylus, can be utilized in place of a finger.

When a finger swipe occurs, the cube 44 rotates smoothly ninety degrees in the direction of the swipe to display another face of the cube. By way of example, if a user sweeps a finger up the directional pad 50, the cube rotates ninety degrees upwards to display a new face. Thus, each face of the cube 44 can contain unique vehicle information, and a greater amount of non-essential information can be available to the driver on command in a smaller amount of real estate on the instrument cluster. The rotation of the cube 44 is smooth and provides an aesthetically pleasing transition from one visible face of the cube 44 to the next visible face of the cube 44.

Figure 2 illustrates an alternate HMI element 100 that can be used in the instrument cluster 10 of Figure 1. The alternate HMI element 100 includes a screen 110 displaying a cube 120, as in the previous example HMI element 40 (see Figure 1). The HMI element 100 of Figure 2 differs from the example of Figure 1, in that a directional pad 130 having four buttons 132, 134, 136, 138 is used as an input to control the rotation of the displayed cube 120, with the direction of rotation indicated by the particular button 132, 134, 136, 138 depressed. In some alternate examples, a different number of buttons can be utilized. In particular, when an alternate shape is displayed in place of a cube 120, the number of buttons corresponds to the number of faces adjoining the displayed face.

Figure 3 illustrates another alternate example HMI element 200 that can be used in the instrument cluster 10 of Figure 1. As with the examples of Figures 1 and 2, the example of Figure 3 includes a screen 210 displaying a face of a cube 220. In the example of Figure 3, however, a joystick 230 is provided as the input in place of the touch screen HMI element 40 of Figure 1, or the buttons 132, 134, 136, 138 of Figure 2. Rotation of the cube 220 is controlled via the joystick 230, with the cube 220 rotating in the direction that the joystick 230 is moved. Utilization of a joystick input allows the user to rotate the cube 220 multiple faces in a single activation by holding the joystick 230 in the activated position.

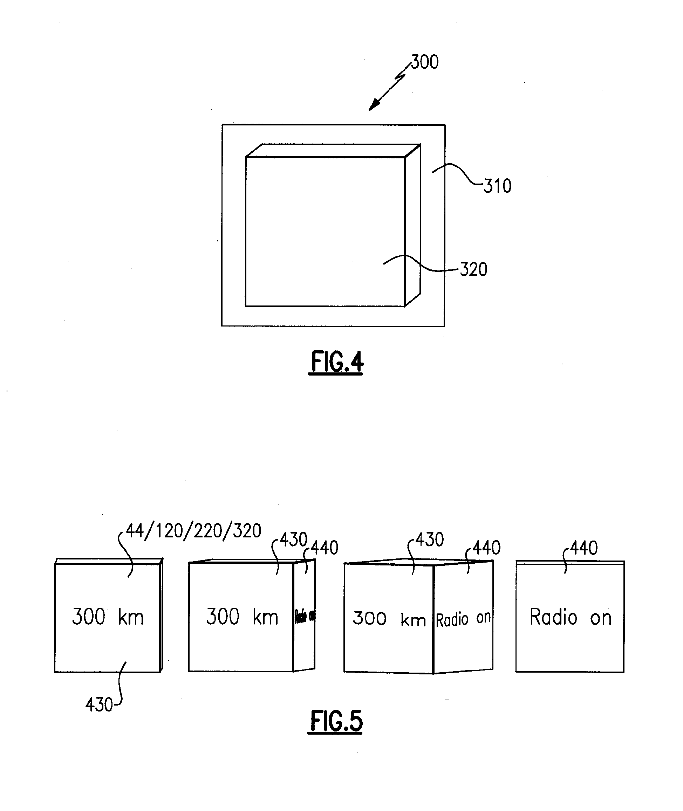

Figure 4 illustrates another example HMI element 300. As with the examples of Figures 1, 2, and 3, the illustrated HMI element 300 includes a touch screen 310 displaying a cube 320. Unlike the previous examples, the HMI element 300 does not include a separate input element. Instead, the screen 310 is a touch screen. A user can rotate the displayed cube 320 by touching the cube 320 and dragging their finger in a desired direction of rotation. This finger swipe causes the cube 320 to display a new face, and view information. Alternately, a gesture control sensor can be used in place of the touch screen 310 and allow the user to rotate the cube 320 without requiring physical contact with the screen 310.

With continued reference to Figures 1-4, Figure 5 illustrates a cube 44, 120, 220, 320 rotating from a first displayed face 430 to a second displayed face 440. As can be seen in the illustration, the three dimensional nature of the displayed cube 44, 120, 220, 320 provides a smooth, aesthetically pleasing rotation from the first displayed face 430 to the second displayed face 440.

In each of the above described examples the input element (the touchscreen directional pad 50, the directional pad 130, and the joystick 230) can alternately be isolated from the display screen 42, 110, 210, thereby allowing the display screen to be located in an inaccessible area of the instrument cluster 10. By way of example the input 50, 130, 230 can be located on the steering wheel, or in the center console of the vehicle, thereby further minimizing the real estate consumed by the non-essential information on the instrument cluster 10, and making the input 50, 130, 230 more accessible.

In an additional example, an owner can connect to the HMI element 40 using an electronic device such as a laptop or a smartphone and customize the information displayed on each side of the cube. In this example, the display would include a preset default information on each face of the cube and the default display could be altered by the owner while the vehicle is not being operated.

While each of the above examples is described with regards to a displayed cube 44, 120, 220, it is understood that any polyhedron could be used in place of the illustrated cube with minimal adjustment to the design. By way of example, a tetrahedron, octahedron, or dodecahedron could alternately be used.

Although an embodiment of this invention has been disclosed, a worker of ordinary skill in this art would recognize that certain modifications would come within the scope of this invention. For that reason, the following claims should be studied to determine the true scope and content of this invention.

### FURTHER EMBODIMENTS

1. An automotive instrument cluster human machine interface (HMI) comprising:
   a display screen operable to display a three dimensional polyhedron, wherein each face of said polyhedron comprises indicia indicating unique vehicle information; and
   an input, wherein said input is operable to rotate said three-dimensional polyhedron such that a new face of said polyhedron is displayed by said display screen.
2. The automotive instrument cluster human machine interface (HMI) of embodiment 1, wherein said input comprises a joystick and wherein said joystick is operable to cause said polyhedron to rotate in a direction of joystick activation.
3. The automotive instrument cluster human machine interface (HMI) of embodiment 1, wherein said input comprises a directional pad having a plurality of buttons, each of said buttons corresponds to a face of said polyhedron contacting said displayed face, and wherein each of said buttons is operable to cause said polyhedron to rotate in a corresponding direction upon activation.
4. The automotive instrument cluster human machine interface (HMI) of embodiment 1, wherein said input is a touchscreen and wherein said touchscreen is operable to cause said polyhedron to rotate in a direction of motion across said touchscreen.
5. The automotive instrument cluster human machine interface (HMI) of embodiment 4, wherein said display screen is a touchscreen.
6. The automotive instrument cluster human machine interface (HMI) of embodiment 5, wherein said display screen and said input are a single touchscreen.
7. The automotive instrument cluster human machine interface (HMI) of embodiment 1, wherein said input is a gesture sensor.
8. The automotive instrument cluster human machine interface (HMI) of embodiment 1, wherein said polyhedron is a cube.
9. The automotive instrument cluster human machine interface (HMI) of embodiment 1, wherein said polyhedron is a tetrahedron.
10. The automotive instrument cluster human machine interface (HMI) of embodiment 1, wherein said polyhedron is an octahedron.
11. The automotive instrument cluster human machine interface (HMI) of embodiment 1, wherein said polyhedron is a dodecahedron.
12. A method for operating an automotive instrument panel human machine interface (HMI) comprising the steps of:
   displaying a polyhedron, wherein each side of said polyhedron includes at least one unique indicia indicative of vehicle information; and
   accepting an input and rotating said polyhedron to an adjacent face in response to said input.
13. The method of embodiment 12, wherein said input is an activation of a button in a directional pad.
14. The method of embodiment 12, wherein said input is an activation of a joystick.
15. The method of embodiment 14, wherein said displayed polyhedron is rotated in a direction of activation of said joystick in response to activation of said joystick.
16. The method of embodiment 12, wherein said input is a motion on a touchscreen.
17. The method of embodiment 16, wherein said displayed polyhedron is rotated in a direction of said motion on said touchscreen.
18. The method of embodiment 12, wherein said input is a hand gesture.
19. The method of embodiment 12, further comprising the step of:
   connecting the instrument panel HMI to an electronic device and altering at least one face of said polyhedron in response to an input from said electronic device.
20. An automotive instrument cluster human machine interface (HMI) comprising:
   a display screen displaying a three dimensional polyhedron, wherein each face of said polyhedron comprises indicia indicating unique vehicle information, and wherein said display screen is an input operable to rotate said three dimensional polyhedron such that a new face of said polyhedron is displayed by said display screen.
21. The automotive instrument cluster human machine interface (HMI) of embodiment 20, wherein said polyhedron is a cube.
22. The automotive instrument cluster human machine interface (HMI) of embodiment 20, wherein said polyhedron is a tetrahedron.
23. The automotive instrument cluster human machine interface (HMI) of embodiment 20, wherein said polyhedron is an octahedron.
24. The automotive instrument cluster human machine interface (HMI) of embodiment 20, wherein said polyhedron is a dodecahedron.
25. The automotive instrument cluster human machine interface (HMI) of embodiment 20, wherein said display screen is a touch screen.
26. The automotive instrument cluster human machine interface (HMI) of embodiment 20, wherein said display screen comprises a gesture recognition sensor.

## Claims

1. An automotive instrument cluster human machine interface (HMI) comprising:
a display screen operable to display a three dimensional polyhedron, wherein each face of said polyhedron comprises indicia indicating unique vehicle information; and
an input, wherein said input is operable to rotate said three-dimensional polyhedron such that a new face of said polyhedron is displayed by said display screen.

2. The automotive instrument cluster human machine interface (HMI) of claim 1, wherein said input comprises a joystick and wherein said joystick is operable to cause said polyhedron to rotate in a direction of joystick activation.

3. The automotive instrument cluster human machine interface (HMI) of claim 1 or 2, wherein said input comprises a directional pad having a plurality of buttons, each of said buttons corresponds to a face of said polyhedron contacting said displayed face, and wherein each of said buttons is operable to cause said polyhedron to rotate in a corresponding direction upon activation.

4. The automotive instrument cluster human machine interface (HMI) according to any of the preceding claims, wherein said input and/or said display screen is a touchscreen.

5. The automotive instrument cluster human machine interface (HMI) of claim 4, wherein said touchscreen is operable to cause said polyhedron to rotate in a direction of motion across said touchscreen.

6. The automotive instrument cluster human machine interface (HMI) of claim 4 or 5, wherein said display screen and said input are a single touchscreen.

7. The automotive instrument cluster human machine interface (HMI) according to any of the preceding claims, wherein said input comprises a gesture sensor.

8. The automotive instrument cluster human machine interface (HMI) according to any of the preceding claims, wherein said polyhedron is a cube, tetrahedron, octahedron or dodecahedron.

9. The automotive instrument cluster human machine interface (HMI) according to any of the preceding claims, wherein said display screen forms the input operable to rotate said three dimensional polyhedron such that a new face of said polyhedron is displayed by said display screen.

10. A method for operating an automotive instrument panel human machine interface (HMI), in particular an automotive instrument panel human interface according to any of the claims 1 - 9, comprising the steps of:
displaying a polyhedron, wherein each side of said polyhedron includes at least one unique indicia indicative of vehicle information; and
accepting an input and rotating said polyhedron to an adjacent face in response to said input.

11. The method of claim 10, wherein said input is an activation of a button in a directional pad and/or an activation of a joystick.

12. The method of claim 11, wherein said displayed polyhedron is rotated in a direction of activation of said joystick in response to activation of said joystick.

13. The method of any of the claims 10 - 12, wherein said input is a motion on a touchscreen and/or a hand gesture.

14. The method of claim 13, wherein said displayed polyhedron is rotated in a direction of said motion on said touchscreen.

15. The method of any of the claims 10 - 14, further comprising the step of:
connecting the instrument panel HMI to an electronic device and altering at least one face of said polyhedron in response to an input from said electronic device.
